# EUROPEAN PATENT APPLICATION

(11) **EP 3 160 081 A1**
(43) Date of publication of application: **26.04.2017**
(21) Application number: 14895457.1
(22) Date of filing: 17.10.2014
(51) Int. Cl.: H04L 12/24

(54) **ALERT DATA PROCESSING METHOD AND NETWORK MANAGEMENT DEVICE**

(30) Priority: 18.06.2014 CN 201410272628
(71) Applicant: ZTE Corporation, Shenzhen, Guangdong 518057 (CN)
(72) Inventor: LIU, Yun, Shenzhen Guangdong 518057 (CN); YU, Chendong, Shenzhen Guangdong 518057 (CN)
(74) Representative: Brevalex
(86) International application number: PCT/CN2014/088834
(87) International publication number: WO 2015/192561

(57) **Abstract**

Disclosed are an alert data processing method and a network management device. The method comprises: when determining that an alert storm is occurring, receiving alert data and then acquiring identification information of the alert data; when determining according to the identification information of the alert data and a preset priority rule that the alert data is alert data with a high priority, adding the alert data to one of a number N of high-priority send queues, N being a positive integer greater than or equal to 1; and extracting M pieces of alert data from the N high-priority send queues and sending the M pieces of alert data to a corresponding client, so that the client processes the alert data, M being a positive integer greater than or equal to 1 and less than or equal to N.

## Description

### TECHNICAL FIELD

The disclosure relates to the network management technology of communications field, and in particular to an alarm data processing method and a network management device.

### BACKGROUND

In network communication environments, network management systems are mainly responsible for alarm management, security management, configuration management and other work of the network, in which the alarm management plays a very important role in the normal operation of network maintenance. In the field of present network communication devices, when an abnormality occurs due to environment impact or hardware fault, network elements need to report the abnormality to a network management system in a manner of alarm. The alarm manner is to send alarm data to the network management system, which then parses the alarm data.

However, as the scale of network devices increases, network elements in the entire network generate a great amount of alarm data during a short time, and the network management system receives a massive amount of alarm data during a short time, that is, an alarm storm occurs. When an alarm storm occurs, if the network management system processes the received alarm data slowly, a great amount of alarm data will be accumulated, resulting in a delayed report of important alarm data and impacting the normal alarm management function.

### SUMMARY

In order to solve the above technical problem, the embodiments of the disclosure provide an alarm data processing method and a network management device.

An embodiment of the disclosure provides an alarm data processing method, including:
when it is determined that an alarm storm occurs, acquiring identification information of alarm data after receiving the alarm data;
when it is determined, according to the identification information of the alarm data and a preset priority rule, that the alarm data is high-priority alarm data, adding the alarm data to one of N high-priority send queues, N being a positive integer greater than or equal to 1; and
extracting M pieces of alarm data from the N high-priority send queues and sending the M pieces of alarm data to a corresponding client so that the client processes the alarm data, M being a positive integer greater than or equal to 1 and less than or equal to N.

In the scheme above, the priority rule may include: one or more pieces of identification information, and a priority corresponding to each piece of identification information, herein the priority includes high priority and low priority; or
the priority rule includes one or more pieces of identification information with preset high priority.

In the scheme above, adding the alarm data to one of N high-priority send queues may include: adding the alarm data to one of N high-priority send queues which corresponds to the identification information of the alarm data, N being a positive integer greater than or equal to 1.

In the scheme above, the method may further include:
when it is determined, according to the identification information of the alarm data and the preset priority rule, that the alarm data is low-priority alarm data, adding the alarm data to a low-priority send queue.

In the scheme above, the method may further include:
Detecting, in real time, the amount of alarm data during a specified duration;
when the amount of alarm data reaches a second preset threshold, controlling new alarm data to be only added to the low-priority send queue, controlling sending of alarm data in the low-priority send queue to be stopped, and controlling sending of alarm data in the high-priority send queue to be maintained; and
when the amount of alarm data does not reach the second preset threshold, sending the alarm data in the low-priority send queue and sending the alarm data in the high-priority send queue.

In the scheme above, adding alarm data to the low-priority send queue includes: establishing a cache space for the low-priority send queue in a network management device and caching the low-priority alarm data to the cache space.

Another embodiment of the disclosure further provides a network management device, including:
a real-time monitoring unit configured to determine that an alarm storm occurs;
an alarm parsing unit configured to acquire identification information of alarm data after upon reception of the alarm data;
an alarm analyzing and processing unit configured to: when it is determined, according to the identification information of the alarm data and a preset priority rule, that the alarm data is high-priority alarm data, add the alarm data to one of N high-priority send queues, N being a positive integer greater than or equal to 1; and
a high-priority management unit configured to extract M pieces of alarm data from the N high-priority send queues and send the M pieces of alarm data to a corresponding client, M being a positive integer greater than or equal to 1 and less than or equal to N.

In the scheme above, the priority rule may include: one or more pieces of identification information, and a priority corresponding to each piece of identification information, herein the priority includes high priority and low priority; or
the priority rule includes one or more pieces of identification information with preset high priority.

In the scheme above, the alarm analyzing and processing unit may be configured to add the alarm data to one of N high-priority send queues which corresponds to the identification information of the alarm data.

In the scheme above, the network management device may further include: a low-priority management unit configured to cache the low-priority alarm data of a low-priority send queue;
herein, the alarm analyzing and processing unit is configured to, when it is determined, according to the identification information of the alarm data and the preset priority rule, that the alarm data is low-priority alarm data, add the alarm data to the low-priority send queue.

In the scheme above, the real-time monitoring unit may be configured to: detect, in real time, the amount of alarm data during a specified duration;
when the amount of alarm data reaches a second preset threshold, control new alarm data to be only added to the low-priority send queue , control sending of alarm data in the low-priority send queue to be stopped, and control sending of alarm data in the high-priority send queue to be maintained; and
when the amount of alarm data does not reach the second preset threshold, send the alarm data in the low-priority send queue and send the alarm data in the high-priority send queue.

In the scheme above, the low-priority management unit may be specifically configured to establish a cache space for the low-priority send queue in the network management device and cache the low-priority alarm data to the cache space.

The alarm data processing method and network management device provided by the embodiments of the disclosure can concurrently report received alarm data for processing according to a priority level by utilizing multi-thread high-priority queues when an alarm storm occurs, thereby ensuring that valuable high-priority alarm data may be processed and reported immediately without being delayed or discarded.

### BRIEF DESCRIPTION OF THE DRAWINGS

Fig. 1 is flowchart of an alarm data processing method according to an embodiment of the disclosure;
Fig. 2 is a structure diagram of a network management device according to an embodiment of the disclosure; and
Fig. 3 is a diagram of an alarm data process flow according to an embodiment of the disclosure.

### DETAILED DESCRIPTION

The disclosure is described below in further detail in conjunction with accompanying drawings and specific embodiments.

### Embodiment 1

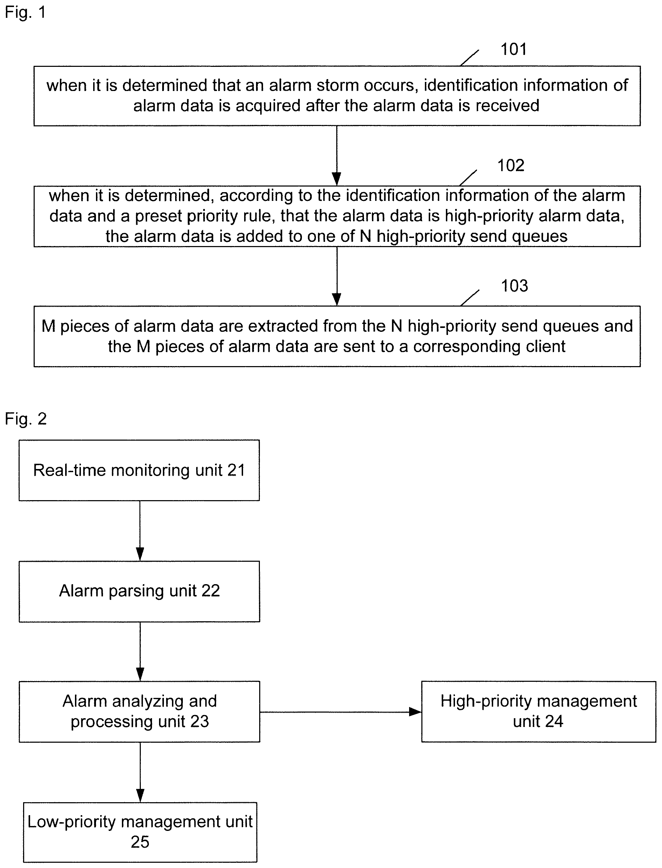

An alarm data processing method provided by an embodiment of the disclosure, as shown in Fig. 1, includes:
Step 101: when it is determined that an alarm storm occurs, identification information of alarm data is acquired after the alarm data is received.

Step 102: when it is determined, according to the identification information of the alarm data and a preset priority rule, that the alarm data is high-priority alarm data, the alarm data is added to one of N high-priority send queues, N being a positive integer greater than or equal to 1.

Step 103: M pieces of alarm data are extracted from the N high-priority send queues and the M pieces of alarm data are sent to a corresponding client so that the client processes the alarm data, M being a positive integer greater than or equal to 1 and less than or equal to N.

Here, the operation that it is determined that an alarm storm occurs may be detecting the amount of alarm data during a specified duration, and, when the amount of alarm data is higher than a preset first threshold, it is determined that an alarm storm occurs; in particular, the way of acquiring alarm data may be that a network management device acquires alarm data according to the regulation of existing technologies; repeated description is omitted here. The first threshold is preset according to actual conditions.

Before the operation of adding the alarm data to one of N high-priority send queues, the method may further include: detecting, according to the identification information of the alarm data, whether there is alarm data with the same identification information in the high-priority send queue or low-priority send queue; if so, directly discarding the alarm data.

The operation of acquiring identification information of alarm data may include: parsing the received alarm data to obtain an Object Identifier (OID) of the alarm data, and making the OID the identification information.

The priority rule may include: one or more pieces of identification information, and a priority corresponding to each piece of identification information, herein the priority may include high priority and low priority; or, the priority rule may include one or more pieces of identification information with preset high priority.

The operation that it is determined, according to the identification information of the alarm data and a preset priority rule, that the alarm data is high-priority alarm data may include: according to the identification information of the alarm data, finding a priority corresponding to the identification information from the preset priority rule, and, when the found priority is a high priority, determining that the alarm data is high-priority alarm data; or, it may include: finding whether the identification information of the alarm data has matched identification information in the high-priority identification information of the preset priority rule, if so, determining that the alarm data is high-priority alarm data.

The adding the alarm data to one of N high-priority send queues includes: adding the alarm data to one of N high-priority send queues which corresponds to the identification information of the alarm data, N being a positive integer greater than or equal to 1. The N high-priority send queues may be N preset cache spaces respectively configured to cache alarm data with a different specified type of identification information.

Correspondingly, the operation of extracting M pieces of alarm data from the N high-priority send queues may be extracting M pieces of alarm data simultaneously from the N high-priority send queues, may also be extracting alarm data simultaneously from M high-priority send queues of the N high-priority send queues and extracting alarm data one by one from rest high-priority send queues so that totally M pieces of alarm data are extracted, or, may further be extracting M pieces of alarm data one by one from the N high-priority send queues.

Further, besides the determining that the alarm data is high-priority alarm data mentioned above, the method may further include: according to the identification information of the alarm data, finding a priority corresponding to the identification information from the preset priority rule, and, when the found priority is a low priority, determining that the alarm data is low-priority alarm data; or, it may include: finding whether the identification information of the alarm data has matched identification information in the high-priority identification information of the preset priority rule, if not, determining that the alarm data is low-priority alarm data.

Preferably, Step 102 may further include: when it is determined, according to the identification information of the alarm data and the preset priority rule, that the alarm data is low-priority alarm data, the alarm data to is added to a low-priority send queue.

Preferably, this embodiment may further include: the amount of alarm data during a specified duration is detected in real time; when the amount of alarm data reaches a second preset threshold, new alarm data is controlled to be only added to the low-priority send queue, sending of alarm data in the low-priority send queue is controlled to be stopped, and sending of alarm data in the high-priority send queue is controlled to be maintained; and when the amount of alarm data does not reach the second preset threshold, the alarm data in the low-priority send queue is sent and the alarm data in the high-priority send queue is sent; herein the second preset threshold is higher than the first preset threshold.

The operation that the alarm data in the low-priority send queue is sent and the alarm data in the high-priority send queue is sent may be: the alarm data in the low-priority send queue is sent according to a set low sending frequency, and the alarm data in the high-priority send queue is sent according to a set high sending frequency; herein the low sending frequency is lower than the high sending frequency; the high sending frequency may be set to be "in real time".

The way of adding the alarm data to a low-priority send queue may include: establishing a cache space for the low-priority send queue in a network management device and caching the low-priority alarm data to the cache space. Correspondingly, the way of sending the alarm data in the low-priority send queue may be sending in a first-in last-out sending way, or may be sending in a first-in first-out sending way.

It is appreciated that, corresponding to the way of caching the low-priority alarm data to the cache space mentioned above, the operation of controlling new alarm data to be only added to the low-priority send queue, and controlling sending of alarm data in the low-priority send queue to be stopped may be: increasing the capacity of the cache space corresponding to the low-priority send queue.

The processing the alarm data mentioned above belongs to an existing technology, repeated description is omitted here, for example, the technology may be reporting to an alarm receiving client.

It can be seen that, in the existing alarm storm reporting technology, the situation where an alarm storm occurs is tackled mainly by methods such as regular discarding, alarm inhabitation, caching for delayed processing; none of these methods is implemented based on the priority level of alarms, which results in a situation that valuable and important alarms cannot be processed immediately or are missed in cases where an alarm storm occurs. Compared with the existing technology, this embodiment concurrently reports received alarm data for processing according to a priority level by utilizing multi-thread high-priority queues when an alarm storm occurs, thereby ensuring that valuable and important alarms may be processed and reported immediately without being delayed or discarded

### Embodiment 2

This embodiment provides a network management device, which, as shown in Fig. 2, includes:
a real-time monitoring unit 21 configured to determine that an alarm storm occurs;
an alarm parsing unit 22 configured to acquire identification information of alarm data after receiving the alarm data;
an alarm analyzing and processing unit 23 configured to: when determining, according to the identification information of the alarm data and a preset priority rule, that the alarm data is high-priority alarm data, add the alarm data to one of N high-priority send queues; and
a high-priority management unit 24 configured to extract M pieces of alarm data from the N high-priority send queues and send the M pieces of alarm data to a corresponding client so that the client processes the alarm data, M being a positive integer greater than or equal to 1 and less than or equal to N.

The real-time monitoring unit 21 is specifically configured to: detect the amount of alarm data during a specified duration in real time, and, when the amount of alarm data is higher than a preset first threshold, determine that an alarm storm occurs; in particular, the method of acquiring alarm data may be acquiring according to the regulation of existing technologies, and repeated description is omitted here. The first threshold is preset according to actual conditions.

The alarm analyzing and processing unit 23 may be further configured to detect, according to the identification information of the alarm data, whether there is alarm data with the same identification information in the high-priority send queue or low-priority send queue, and, if so, directly discard the alarm data.

The alarm parsing unit 22 is specifically configured to parse the received alarm data to obtain an OID of the alarm data and make the OID the identification information.

The priority rule may include: one or more pieces of identification information, and a priority corresponding to each piece of identification information, herein the priority may include high priority and low priority; or, the priority rule may include one or more pieces of identification information with preset high priority.

The alarm analyzing and processing unit 23 is specifically configured to: according to the identification information of the alarm data, find a priority corresponding to the identification information from the preset priority rule, and, when the found priority is a high priority, determine that the alarm data is high-priority alarm data; or, it may be configured to: find whether the identification information of the alarm data has matched identification information in the high-priority identification information of the preset priority rule, if so, determine that the alarm data is high-priority alarm data.

The alarm analyzing and processing unit 23 is specifically configured to: according to the identification information of the alarm data, find a priority corresponding to the identification information from the preset priority rule, and, when the found priority is a low priority, determine that the alarm data is low-priority alarm data; or, it may be configured to: find whether the identification information of the alarm data has matched identification information in the high-priority identification information of the preset priority rule, if not, determine that the alarm data is low-priority alarm data.

Preferably, the alarm analyzing and processing unit 23 is further configured to: when determining, according to the identification information of the alarm data and the preset priority rule, that the alarm data is low-priority alarm data, add the alarm data to a low-priority send queue.

Preferably, the real-time monitoring unit 21 is further configured to: detect the amount of alarm data during a specified duration in real time; when the amount of alarm data reaches a second preset threshold, control the adding of new alarm data to the low-priority send queue only and the pause of sending the alarm data in the low-priority send queue, and controlling the keeping of sending the alarm data in the high-priority send queue; and when the amount of alarm data does not reach the second preset threshold, send the alarm data in the low-priority send queue and send the alarm data in the high-priority send queue; herein the second preset threshold is higher than the first preset threshold.

The network management device further includes: a low-priority management unit 25 configured to send the alarm data in the low-priority send queue according to a set low sending frequency.

The low-priority management unit 25 is specifically configured to establish a cache space for the low-priority send queue and cache the low-priority alarm data to the cache space. Correspondingly, the method of the sending the alarm data in the low-priority send queue may be a first-in last-out sending method, or may be a first-in first-out sending method.

The high-priority management unit is configured to add the alarm data to one of N high-priority send queues which corresponds to the identification information of the alarm data, N being a positive integer greater than or equal to 1. The N high-priority send queues may be N preset cache spaces respectively configured to cache alarm data with a different specified type of identification information.

The high-priority management unit is further configured to extract M pieces of alarm data simultaneously from the N high-priority send queues, may also be configured to extract alarm data simultaneously from M high-priority send queues of the N high-priority send queues and extract alarm data one by one from rest high-priority send queues so that totally M pieces of alarm data are extracted, or, may be further configured to extract M pieces of alarm data one by one from the N high-priority send queues.

It is appreciated that, corresponding to the method of the caching the low-priority alarm data to the cache space mentioned above, the controlling the adding of new alarm data to the low-priority send queue only and the pause of sending the alarm data in the low-priority send queue may be: increasing the capacity of the cache space corresponding to the low-priority send queue.

The processing the alarm data mentioned above belongs to an existing technology, repeated description is omitted here, for example, the technology may be reporting to an alarm receiving client.

### Embodiment 3

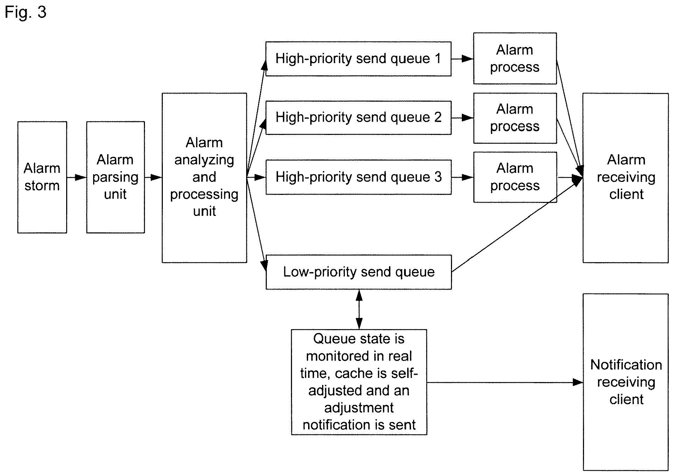

One scenario of processing an alarm storm problem using the alarm data processing method and network management device provided by the disclosure, as shown in Fig. 3, includes the following steps:
S301: when an alarm storm occurs, an alarm parsing unit parses alarm data, an alarm analyzing and processing unit forwards the alarm data to a corresponding high-priority send queue 1, 2, 3 or a low-priority send queue according to a priority rule and filters out repeated alarms.

S302: in a high-priority send queue, the alarm data is extracted out immediately and is subjected to alarm processing operations such as service fulfillment; to make the alarm processing efficient without delay, the alarm of each type of network element has a corresponding high-priority send queue; in addition, the high-priority send queue may concurrently send the alarm data, or send the alarm data in a polling manner, for example, the high-priority queues 1 and 2 are set to concurrently sent the alarm data.

S303: an alarm process executes service fulfillment related operations such as parse processing on the alarm sent from the high-priority send queue and reports to an alarm receiving client.

S304: a low-priority queue is mainly configured to cache a great amount of low-priority alarm data when an alarm storm occurs so as to ensure that the alarm receiving client can efficiently receive the alarm sent from the high-priority queue; when the alarm storm traffic is reduced to a receiving threshold of the alarm receiving client, the low-priority alarm is sent to the client.

S305: a real-time monitoring module continues detecting the threshold of alarm storm traffic and the state of the cache queue, and hereby adjusts the size of the priority cache queue and sends the state to a notification receiving client.

When the maximum receiving threshold of the alarm receiving client is reached, the low-priority queue increases the capacity to cache the low-priority alarm data and stops sending the alarm data so as to ensure that the alarm sent from the high-priority queue may be received and processed immediately by the alarm receiving client. When the storm pressure is below the alarm receiving threshold of the client, the low-priority queue sends alarms.

In the embodiments provided in this application, it should be understood that the disclosed device and method may be realized through other ways. The device embodiments described above are exemplary only, for example, the division of unit is a division of logical function merely, and may select other division methods during actual implementation, for example, a plurality of units or components may be combined, or may be integrated into another system, or some feature may be neglected or not executed. In addition, the mutual coupling, or direct coupling, or communication connection between the displayed or discussed components may be realized through some interfaces; the direct coupling or communication connection between devices or units may be electrically, mechanically or in other forms.

The above unit described as a separate component may be or may not be physically separated; the component, displayed as a unit, may be or may not be a physical unit, that is, it may be located at one place, or may be distributed on a plurality of network units. Part or all units may be selected to realize the purpose of solutions of the embodiments according to actual needs.

In addition, each function unit in each embodiment of the disclosure may be integrated in a processing unit, or each unit serves as a unit separately, or two or more units are integrated in a unit. The above integrated units may be realized in the form of hardware, or in the form of a hardware plus software function unit.

The ordinary staff in this field can understand that: all or part steps to implement the above method embodiments may be completed through a program instructing related hardware, the program may be stored in a computer readable storage medium and executes steps including the above method embodiments during execution. The storage medium includes: mobile storage device, Read-Only Memory (ROM), Random Access Memory (RAM), disk or compact disk and various mediums capable of storing program codes.

Or, when the above integrated units in the disclosure are realized in the form of software function modules and are sold or used as an independent product, they may be stored in computer readable storage medium. Based on this understanding, the technical scheme of the embodiments of the disclosure or the part making a contribution to the existing technology on essence may be embodied in the form of software product. This computer software product is stored in a storage medium, including a number of instructions that enables a computer device (which might be a computer, a server or a network device, etc.) to execute part or the entirety of the method described in each embodiment of the disclosure. The aforementioned storage medium includes: mobile storage device, ROM, RAM, diskette or compact disc and various mediums capable of storing program codes.

The above are the specific embodiments of the disclosure merely; however, the protection scope of the disclosure is not limited to this; any variations or substitutions easily thought by one skill familiar with the technical field are intended to be within the scope of protection of the disclosure. Therefore, the scope of protection of the disclosure should be based on the protection scope of claims appended herein.

### INDUSTRIAL APPLICABILITY

The disclosure provides an alarm data processing method and a network management device, which, when an alarm storm occurs, add alarm data to one of N high-priority send queues when determining, according to the identification information of the alarm data and a preset priority rule, that the alarm data is high-priority alarm data, and extract alarm data from the high-priority send queues and send to a corresponding client so that the client processes the alarm data; in this way, the method and device can concurrently report received alarm data for processing according to a priority level by utilizing multi-thread high-priority queues, thereby ensuring that valuable high-priority alarm data may be processed and reported immediately without being delayed or discarded.

## Claims

1. An alarm data processing method, comprising:
when it is determined that an alarm storm occurs, acquiring identification information of alarm data after receiving the alarm data;
when it is determined, according to the identification information of the alarm data and a preset priority rule, that the alarm data is high-priority alarm data, adding the alarm data to one of N high-priority send queues, N being a positive integer greater than or equal to 1; and
extracting M pieces of alarm data from the N high-priority send queues and sending the M pieces of alarm data to a corresponding client so that the client processes the alarm data, M being a positive integer greater than or equal to 1 and less than or equal to N.

2. The method according to claim 1, wherein
the priority rule comprises: one or more pieces of identification information, and a priority corresponding to each piece of identification information, wherein the priority comprises high priority and low priority; or
the priority rule comprises one or more pieces of identification information with preset high priority.

3. The method according to claim 1 or 2, wherein adding the alarm data to one of N high-priority send queues comprises: adding the alarm data to one of N high-priority send queues which corresponds to the identification information of the alarm data, N being a positive integer greater than or equal to 1.

4. The method according to claim 1 or 2, further comprising:
when it is determined, according to the identification information of the alarm data and the preset priority rule, that the alarm data is low-priority alarm data, adding the alarm data to a low-priority send queue.

5. The method according to claim 4, further comprising:
detecting, in real time, the amount of alarm data during a specified duration;
when the amount of alarm data reaches a second preset threshold, controlling new alarm data to be only added to the low-priority send queue, controlling sending of alarm data in the low-priority send queue to be stopped, and controlling sending of alarm data in the high-priority send queue to be maintained; and
when the amount of alarm data does not reach the second preset threshold, sending the alarm data in the low-priority send queue and sending the alarm data in the high-priority send queue.

6. The method according to claim 5, wherein adding the alarm data to the low-priority send queue comprises: establishing a cache space for the low-priority send queue in a network management device and caching the low-priority alarm data to the cache space.

7. A network management device, comprising:
a real-time monitoring unit configured to determine that an alarm storm occurs;
an alarm parsing unit configured to acquire identification information of alarm data upon reception of the alarm data;
an alarm analyzing and processing unit configured to, when it is determined, according to the identification information of the alarm data and a preset priority rule, that the alarm data is high-priority alarm data, add the alarm data to one of N high-priority send queues, N being a positive integer greater than or equal to 1; and
a high-priority management unit configured to extract M pieces of alarm data from the N high-priority send queues and send the M pieces of alarm data to a corresponding client, M being a positive integer greater than or equal to 1 and less than or equal to N.

8. The network management device according to claim 7, wherein the priority rule comprises:
one or more pieces of identification information, and a priority corresponding to each piece of identification information, wherein the priority comprises high priority and low priority; or
the priority rule comprises one or more pieces of identification information with preset high priority.

9. The network management device according to claim 7 or 8, wherein the alarm analyzing and processing unit is configured to add the alarm data to one of N high-priority send queues which corresponds to the identification information of the alarm data.

10. The network management device according to claim 7 or 8, further comprising: a low-priority management unit configured to cache low-priority alarm data of a low-priority send queue;
wherein the alarm analyzing and processing unit is configured to, when it is determined, according to the identification information of the alarm data and the preset priority rule, that the alarm data is low-priority alarm data, add the alarm data to the low-priority send queue.

11. The network management device according to claim 10, wherein the real-time monitoring unit is configured to: detect, in real time, the amount of alarm data during a specified duration;
when the amount of alarm data reaches a second preset threshold, control new alarm data to be only added to the low-priority send queue , control sending of alarm data in the low-priority send queue to be stopped, and control sending of alarm data in the high-priority send queue to be maintained; and
when the amount of alarm data does not reach the second preset threshold, send the alarm data in the low-priority send queue and send the alarm data in the high-priority send queue.

12. The network management device according to claim 11, wherein the low-priority management unit is configured to establish a cache space for the low-priority send queue in the network management device and cache the low-priority alarm data to the cache space.
